# FASCICULE DE BREVET EUROPEEN

(11) **EP 3 332 630 B1**
(45) Date de publication et mention de la délivrance du brevet: **26.02.2020**
(21) Numéro de dépôt: 17001982.2
(22) Date de dépôt: 06.12.2017
(51) Int. Cl.: A01G 7/06

(54) **PROCÉDÉ POUR INJECTION D'UNE SUBSTANCE SOUS L'ÉCORCE D'UNE PLANTE**
VERFAHREN ZUR INJEKTION EINER SUBSTANZ UNTER DIE RINDE EINER PFLANZE
METHOD FOR INJECTING A SUBSTANCE UNDER THE BARK OF A PLANT

(30) Priorité: 06.12.2016 FR 1601737
(43) Date de publication de la demande: 13.06.2018
(73) Titulaire: Lauragri Services, 31460 Le Faget (FR); Précision Mécanique Technique (PREMETEC), 09700 Saverdun (FR)
(72) Inventeur: Beuste, Philippe, 31460 Le Faget (FR)
(74) Mandataire: Barbot, Willy

(56) Documents cités:
- WO-A1-2013/010909
- GB-A- 345 694
- US-A- 3 461 588
- US-A- 5 239 773
- US-A- 5 797 215
- US-A1- 2004 025 420

## Description

La présente invention concerne un nouveau procédé de traitement d'une plante par injection sous son écorce d'une substance, de préférence d'une substance phytosanitaire.

Dans le domaine du traitement des plantes, par exemple pour répondre à une infestation par des insectes, à une infection bactérienne ou fongique, à une carence en éléments nutritifs ou pour corriger des problèmes de croissance, il est connu d'administrer une substance de type insecticide, antibiotique, antifongique, nutriment, ou encore régulateur de croissance.

Une telle administration peut se faire selon au moins trois modes d'application. Une application foliaire nécessite une couverture foliaire minutieuse et est difficile pour de grands arbres. Une possible dérive aérienne cause un mauvais rendement et nécessite une quantité augmentée de substance phytosanitaire et crée de plus un risque de pollution aérienne et/ou sur des plantes voisines.

Une application au sol, du fait de la diffusion dans les sols, nécessite une quantité augmentée de substance, même si moindre que dans le cas de l'application foliaire. Ce mode crée de plus un risque de pollution des sols.

Une application par injection, où la substance est introduite directement dans la plante, permet avantageusement de réduire drastiquement la quantité de substance nécessaire. La substance n'est jamais en contact avec l'environnement extérieur. Ainsi, les risques de pollution sont quantitativement et qualitativement réduits. La substance est injectée sous l'écorce au plus près du xylème, le système vasculaire de la sève ascendante, qui assure alors un transport de la substance vers les organes ciblés allant du tronc en passant par les feuilles et les éventuels fruits.

Cependant l'injection présentait jusqu'alors quelques inconvénients.

L'accès au xylème s'effectue le plus souvent au moyen d'un perçage, réalisé au moyen d'un foret. Cette technique échauffe la plante et réalise un trou de grande taille qui crée une blessure importante de la plante, augmente le risque de diffusion du pathogène (insecte, champignon, bactérie, etc.) et nécessite généralement une opération supplémentaire de bouchage/pansement.

La percolation (administration de la substance sans pression, uniquement gravitaire) ne permet ni de garantir la bonne administration, ni de maitriser sa durée.

En lien avec ces problématiques, les inventeurs ont précédemment développé un dispositif d'injection d'une substance sous l'écorce d'une plante, lequel dispositif comprend un corps, une aiguille sensiblement rectiligne percée d'un canal, un premier actionneur apte à mobiliser l'aiguille selon l'axe de l'aiguille et selon une direction centrifuge de telle manière à permettre son introduction dans la plante, un injecteur apte à injecter la substance au travers de l'aiguille via le canal, comprenant encore un protecteur conformé de manière à entourer l'aiguille, afin d'empêcher tout contact avec l'aiguille, et un moyen glissière apte à permettre un mouvement d'escamotage selon une direction centripète du protecteur lorsque un appui centripète est exercé sur le protecteur, afin de dévoiler l'aiguille et permettre son introduction. Ce dispositif est décrit dans les brevets français FR3052634 et FR3052635.

Si ce dispositif a offert une grande satisfaction, il n'en reste pas moins qu'à de multiples reprises, des coulures ont été observées pendant et/ou après l'injection de la substance dans des arbres, altérant de ce fait l'efficacité et la reproductibilité de l'injection.

Pour essayer de solutionner ce problème, les inventeurs ont utilisé différentes aiguilles et, notamment, des aiguilles dont l'extrémité, résultant de l'écrasement d'un tube cylindrique, prenait la forme d'un « burin » avec deux biseaux opposés se rejoignant pour former un bord incisant. Comme précédemment, l'orifice de sortie de l'aiguille était positionné sur la périphérie de l'aiguille.

Maintenant, les multiples tentatives d'injection avec ces aiguilles, comme avec les autres d'ailleurs, n'ont pas donné plus de satisfaction et des coulures ont été systématiquement observées durant l'injection et après l'injection également.

La demande internationale WO 2013/010909 porte sur un dispositif d'injection d'un liquide dans un arbre. Ce dispositif génère des dommages limités à l'arbre, qui sont réparables par le processus de cicatrisation naturel. Le corps du système d'injection est de forme biconvexe et l'extrémité distale est cunéiforme de manière à limiter les déchirures des fibres de l'arbre. Finalement, ce document envisage une insertion dans le sens des fibres pour limiter les dommages à l'arbre (cf. figure 7 par exemple).

Le brevet américain US 3,461,588 traite d'un pistolet fonctionnant à l'aide de cartouches explosives pour l'injection sous-corticale de produits phytosanitaires dans un arbre. L'aiguille, positionnée au repos dans un compartiment protecteur est inséré dans le tronc à la force de l'explosion. L'appareil comprend également un moyen de retrait du dispositif du tronc de l'arbre.

Les brevets US 5 239 773 et US 5797215 divulguent également des aiguilles pour l'injection d'une substance sous l'écorce d'une plante.

Finalement, c'est par hasard que les inventeurs en utilisant ces mêmes aiguilles présentant un bord incisant, mais en ne le positionnant plus verticalement et dans le sens des fibres de bois comme ils le faisaient jusqu'alors, mais horizontalement cette fois, qu'ils ont réussis à injecter dans un arbre en sous-cortical une substance sans obtenir de coulure durant ni après l'injection.

Il semble que l'intuition de limiter le traumatisme à l'arbre et de faciliter la refermeture de l'incision en opérant une incision dans le sens des fibres les ai éloigné de cette solution qui, outre le fait de permettre une injection sans coulure, a révéler permettre également une bonne refermeture de l'écorce après injection.

En conséquence, un premier objet de l'invention porte sur un procédé selon la revendication 1.

Avantageusement, la surface des deux biseaux opposés présente chacune indépendamment une surface plane, sphérique ou concave, de préférence la surface des deux biseaux opposés est une surface plane.

Une telle extrémité d'aiguille peut être obtenue simplement par écrasement/pincement d'un tube cylindrique du diamètre approprié.

Comme cela ressort de ce qui précède, l'extrémité de l'aiguille ne présente aucun trou.

Avantageusement encore, le bord incisant unique (8) s'inscrit dans le diamètre du tube cylindrique.

En effet, les inventeurs ont mis en évidence que l'utilisation d'aiguilles dont le bord incisant unique (8) s'étendait au-delà de ce diamètre (du fait d'une absence d'ébavurage après formation de l'extrémité de l'aiguille) résultait en des coulures durant l'injection.

Idéalement, l'aiguille (3) est fine avec un diamètre moyen préférentiellement compris entre 2 et 5 mm, de préférence encore entre 3 et 4 mm.

L'aiguille (3) pourra comprendre en outre une butée de profondeur (9) (par exemple ayant la forme d'une excroissance sur le tube cylindrique) apte à limiter la longueur d'aiguille introduite sous l'écorce de la plante, préférentiellement entre 1 et 15 cm, et de manière préférée entre 3 et 8 cm.

Avantageusement toujours, l'aiguille pourra comprendre un clapet anti-retour, de préférence à sa base. Un tel clapet anti-retour permet de limiter les risques de formation de bulles d'air dans le volume de substance à injecter, lesquelles bulles d'air, si elles sont injectées, sont susceptibles d'affecter fortement la plante.

Pour ce qui est de l'injection, l'aiguille (3) présentera au moins un et, éventuellement, plusieurs trous (5) distaux, à la périphérie de l'aiguille, formant des sorties du canal (4) et permettant d'injecter la substance sous l'écorce de la plante.

Avantageusement encore, l'aiguille (3) est pourvue d'un marquage de positionnement. Naturellement, ce marquage de positionnement aura une position déterminée en regard du bord incisant unique (8) de l'aiguille (3).

Pour ce qui est du dispositif, il pourra comprendre un moyen de couplage (11,12) de l'aiguille (3) dont l'action de couplage est permise par un déplacement de celle-ci selon une direction centripète. De préférence, le moyen de couplage (11,12) utilisé est apte à permettre un couplage/découplage rapide (ex. du type SDS utilisé sur les forets, « Spécial Direct System ») afin de permettre un changement rapide d'aiguille (3).

Selon une caractéristique préférée, le dispositif utilisé dans le procédé selon l'invention comprendra un moyen de couplage (11,12) de l'aiguille (3) qui permet un positionnement déterminé du bord incisant unique (8) de l'aiguille (3) en regard du dispositif (1). Dans le cas où le moyen de couplage (11,12) intègre une entaille (12) sur l'aiguille (3), cette entaille (12) aura ainsi également une fonction de marquage de positionnement de l'aiguille (3).

Ainsi, ce moyen ne permettra pas le couplage si l'opérateur insère l'aiguille (3) de façon incorrecte (avec le bord incisant unique (8) de biais par rapport au dispositif (1)). De la sorte, ledit moyen de couplage aura ainsi une fonction de détrompeur pour l'opérateur.

Selon une autre caractéristique, le dispositif comprend un indicateur (10) (non représenté) permettant à l'opérateur de visualiser la position du bord incisant unique (8) de l'aiguille (3). De la sorte, l'opérateur est à même de positionner correctement le dispositif (1) de sorte de permettre une injection optimale, sans coulure, de la substance sous l'écorce de la plante.

En lien avec la substance injectée, celle-ci est choisie dans le groupe comprenant les insecticides, les antibiotiques, les antifongiques, les antiparasitaires, les nutriments et les régulateurs de croissance. De préférence, la substance injectée est une substance phytosanitaire.

De préférence, le dispositif (1) comprend un réservoir contenant la substance à injecter.

Pour ce qui est de l'actionneur (6) de l'aiguille (3), il peut comprendre un vérin ou un percuteur.

Pour ce quoi est maintenant de l'injecteur (7), celui-ci doit permettre une injection d'un volume déterminé de substance sous l'écorce de la plante avec une durée d'injection inférieure à 20 secondes, de préférence inférieure à 10 secondes et, de manière particulièrement préférée, avec une durée d'injection comprise entre 2 et 5 secondes.

Ce volume déterminé de substance à injecter est compris entre 1 et 10 mL, de préférence entre 1 et 5 mL. Ce volume s'entend naturellement par site d'injection et plusieurs injections d'un tel volume peuvent être effectuées sur un seul et même arbre.

L'injecteur doit en outre permettre d'effectuer une montée en pression progressive (sans à-coups) avec une pression d'injection qui, partant de 0, va monter jusqu'à 200 bars en fin d'injection, de préférence jusqu'à 150 bars. Cette pression d'injection s'entend comme la pression exercée par l'injecteur (7) au niveau de sa zone de contact avec la substance (ex. surface d'un piston) et non comme la valeur de pression d'injection en sortie d'aiguille.

Avantageusement, l'injecteur (7) comprend un moyen de réglage du débit de la substance, laquelle molette de réglage permet de faire varier la pression d'injection de sorte d'injecter le volume déterminé de substance dans la durée d'injection requise.

Actionneur (6) et injecteur (7) peuvent être actionnés par toute source de puissance connue, notamment par une source de puissance électrique et/ou pneumatique qui, dans le cas d'une source électrique, peut prendre la forme d'une batterie, notamment d'un bloc d'accumulateurs échangeable.

Enfin, et dans le cas d'un dispositif (1) en version portative, celui-ci comprendra un moyen de préhension et de guidage, comme une poignée. Un tel moyen facilitera ainsi grandement la prise en main par l'opérateur.

Avantageusement, le procédé selon l'invention comprend en outre une étape iv) d'extraction de l'aiguille.

Une telle étape d'extraction peut être effectuée à l'aide d'un second actionneur associé au dispositif (1), comme celui décrit dans les brevets français FR 3052634 et FR 3052635.

L'invention concerne encore une utilisation, pour le traitement d'une plante par injection d'une substance, de préférence d'une substance phytosanitaire, d'une aiguille telle que décrite précédemment, de préférence d'une aiguille (3) prenant la forme d'un tube cylindrique comportant en son centre, un canal (4) qui débouche par au moins un trou (5) sur la paroi latérale dudit tube cylindrique, et non à l'extrémité destinée à pénétrer dans la plante ; laquelle extrémité présente deux biseaux opposés formant ensemble un bord incisant unique (8) perpendiculaire par rapport à l'axe (AA) de l'aiguille et lequel bord incisant unique (8) pénètre dans la plante perpendiculairement aux fibres de bois.

D'autres caractéristiques, détails et avantages de l'invention ressortiront plus clairement de la description détaillée donnée ci-après à titre indicatif en relation avec des dessins sur lesquels :

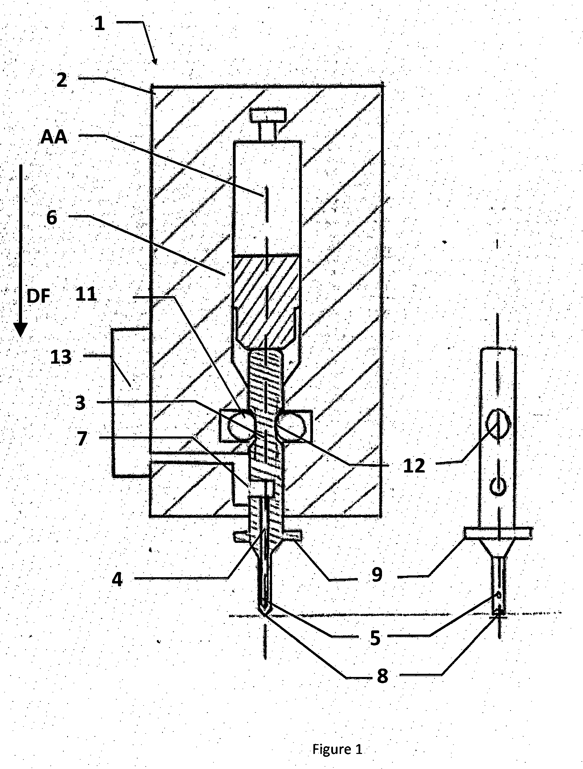

- la figure 1 montre une vue schématique en coupe du dispositif utilisé dans le procédé selon l'invention, avec une vue complémentaire de l'aiguille associée sous un autre angle,

La figure 1 illustre un mode de réalisation d'un dispositif 1 utilisé dans le procédé selon l'invention d'un appareil 1 permettant de réaliser une injection d'une substance sous l'écorce d'une plante (non représentée). Cet appareil 1 comprend un corps 2 qui permet d'intégrer tous les autres composants du dispositif 1. Il emporte principalement une aiguille 3 sensiblement rectiligne, d'axe AA. L'aiguille 3 est avantageusement creuse, sur au moins une partie de sa longueur, en ce qu'elle est percée d'un canal 4 apte à transporter une substance. Le dispositif 1 comprend encore un actionneur 6 apte à mobiliser l'aiguille 3 selon son axe AA et selon une direction centrifuge DF de telle manière à permettre l'introduction de l'aiguille 3 dans une plante, par exemple dans le tronc d'un arbre.

Le dispositif 1 comprend encore un injecteur 7 apte à injecter la substance au travers de l'aiguille 3, via le canal 4. L'injecteur 7 peut être tout dispositif apte à injecter une certaine quantité de substance. Il peut par exemple s'agir d'un compresseur, d'une pompe de tout type, ou encore d'un vérin doseur. Il a été vu par les inventeurs qu'une montée en pression brutale et/ou avec à-coups était vulnérante pour la plante. Aussi le dispositif 1 proposé présente préférentiellement un moyen permettant de régler la vitesse d'injection de la substance, lequel moyen permet de moduler la pression d'injection.

Pour ce qui est de la pression d'injection exercée par l'injecteur (7), elle est telle qu'un volume déterminé de substance doit être injecté sous l'écorce de la plante en une durée inférieure à 20 secondes, de préférence inférieure à 10 secondes et, de manière particulièrement préférée, en une durée d'injection comprise entre 2 et 5 secondes.

Comme mentionné précédemment, ce volume déterminé de substance à injecter est compris entre 1 et 10 mL, de préférence entre 1 et 5 mL.

En lien avec la pression d'injection, celle-ci peut monter jusqu'à 200 bars en fin d'injection, de préférence jusqu'à 150 bars.

L'actionneur 6 a pour fonction de mobiliser l'aiguille 3 selon son axe AA et une direction centrifuge DF, s'éloignant du centre du dispositif 1, afin de réaliser l'introduction de l'aiguille 3 sous l'écorce de la plante. Pour cela, cet actionneur 6 peut être de tout type apte à réaliser cette fonction : embiellage, système vis/écrou, vérin, masselotte, etc. Selon un premier mode de réalisation, l'actionneur 6 comprend une masselotte (au sein d'une chambre de percussion) L'application d'une pression sur ladite masselotte (au sein de la chambre de percussion), correctement dimensionné, réalise alors un déplacement de l'aiguille 3 apte à réaliser son introduction sous l'écorce de la plante. Dans ce mode de réalisation, l'aiguille 3 est mobile relativement au corps 2, d'au moins l'amplitude nécessaire à l'introduction sous l'écorce de la plante. Selon un autre mode de réalisation, préféré, l'actionneur 6 comprend un percuteur lequel correspond typiquement à une masse en mouvement qui vient percuter la base de l'aiguille 3, ou une pièce porte aiguille, de manière à lui imprimer un mouvement permettant son introduction sous l'écorce de la plante. La percussion peut être unique, ou plus classiquement multiple, par exemple au moyen d'un excentrique ou d'un élément oscillant.

Selon une autre caractéristique avantageuse, le dispositif 1 comprend encore un indicateur (non représenté) de la position du bord incisant unique 8 de l'aiguille 3 relativement au dispositif 1.

Le dispositif 1 comprend encore avantageusement un moyen d'accouplement, qui peut prendre la forme de billes 11 sur le dispositif 1 qui coopèrent avec une ou plusieurs entailles 12 sur l'aiguille 3, de sorte de maintenir l'aiguille 3 en position dans le dispositif. Un tel moyen d'accouplement est encore apte à permettre un couplage/découplage rapide, afin de permettre un changement rapide d'aiguille 3. Pour cela un tel moyen d'accouplement peut comprendre un mandrin de type SdS, la base des aiguilles 3 présentant une interface idoine 12. Un tel changement d'aiguille 3 est avantageux à plus d'un titre. La fonction première d'une aiguille 3 est de venir placer au moins un trou 5 distal, sortie du canal 4 par lequel la substance phytosanitaire est injectée, à une certaine profondeur sous l'écorce de la plante. Selon le type de plante, cette profondeur d'injection peut varier. Aussi un premier intérêt d'un changement d'aiguille 3 est de pouvoir changer la profondeur d'injection en fonction du type de plante à traiter. Cette profondeur peut encore évoluer au sein d'une même essence en fonction de l'âge de la plante.

Selon le type de problème rencontré, ou selon le type de traitement, une contamination (par transport de bactérie, de champignon, d'insecte, ...) est possible, via l'aiguille, d'une plante traitée à une autre. Aussi est-il préférable, de n'utiliser une aiguille 3 pour le traitement que d'une seule plante. Aussi est-il intéressant de pouvoir changer d'aiguille 3 à chaque plante traitée, et ce d'autant plus rapidement que cette manœuvre de changement est fréquente. Une aiguille utilisée pour traiter un arbre pourra alors être jetée après usage, ou préférentiellement reconditionnée (lavée, stérilisée, etc.).

L'extrémité de l'aiguille 3 prend la forme de deux biseaux opposés formant ensemble un bord incisant unique 8 perpendiculaire par rapport à l'axe (AA) de l'aiguille. Cette forme, en combinaison avec une introduction du bord incisant unique 8 perpendiculairement aux fibres de bois, permet l'injection subséquente de la substance par l'au moins un trou 5 distal à la profondeur souhaitée tout en évitant les coulures. Aussi l'aiguille 3 est préférentiellement fine et présente un diamètre moyen préférentiellement compris entre 2 et 5 mm pour une aiguille 3 en matériau métallique et creuse de manière à permettre la présence du canal 4 d'injection. Une telle dimension permet de former un trou dans la plante suffisamment petit pour ne pas nécessiter une opération supplémentaire, par exemple de pré-perforation, de rebouchage ou de masticage.

De surcroît, le bord incisant unique 8 de l'aiguille 3 est préférentiellement ébavuré et s'inscrit dans le diamètre du tube cylindrique de l'aiguille 3, ce qui permet d'éviter les coulures durant l'injection.

Afin d'automatiser le procédé et obtenir une profondeur déterminée d'introduction de l'aiguille 3, et ainsi une profondeur d'injection constante et reproductible, le dispositif 1 comprend encore avantageusement une butée de profondeur 9 apte à limiter la longueur d'aiguille introduite. De préférence, la butée de profondeur 9 prend la forme d'un épaulement réalisé de matière avec l'aiguille 3.

L'aiguille 3 comprend au moins un, préférentiellement plusieurs, trou(s) 5 distaux. Ces trous forment des sorties du canal 4, et permettent de disperser la substance phytosanitaire injectée via l'aiguille 3 et le canal 4. L'entrée du canal 4 est typiquement placée au niveau de la base ou extrémité proximale de l'aiguille 3 préférentiellement en son centre. Le(s) trou(s) 5 sont avantageusement disposé(s) à la périphérie de l'aiguille 3. Ceci exclut une disposition axiale du(es)dit(s) trou 5, à l'extrémité distale de l'aiguille, afin de réduire/supprimer le risque de bouchage du(es)dit(s) trou 5 par les fibres de la plante. Pour une raison identique, le(s)dit(s) trou(s) 5 est/sont encore avantageusement orienté(s) de manière à sensiblement regarder vers l'extrémité proximale de l'aiguille 3 et non vers l'extrémité distale.

Avantageusement tous les trous 5 sont disposés sur l'aiguille, à une même profondeur ou dans un intervalle donné de profondeur, correspondant soit à la profondeur souhaitée d'injection, soit à la profondeur ou intervalle de profondeur où se trouve le xylème de la plante ciblée.

Le procédé de traitement réalisé par le dispositif 1 est mécanisé afin que tous les paramètres : force et profondeur d'introduction, quantité et vitesse de substance injectée, vitesse d'extraction, etc. soient maitrisés. Pour l'injection, un bouton, avantageusement gradué permet de régler la pression et/ou la vitesse d'injection. Ceci permet encore de trouver la pression/vitesse qui permet une absorption optimale de la substance phytosanitaire par la plante et qui peut varier en fonction de la viscosité de la substance injectée et de la capacité d'absorption de la plante.

Le dispositif 1 peut comprendre un réservoir 13 apte à stocker la substance avant injection. Dans un tel mode de réalisation, ce réservoir est associé (ou intégré) au corps 2 du dispositif 1 et est alors soit apte à contenir le volume de substance nécessaire pour une campagne de traitement, soit un volume qui peut aller jusqu'à plusieurs litres. Ce volume peut être réduit si le dispositif 1 est portatif.

En fonction de la plante (essence et taille), il sera possible d'effectuer une ou plusieurs injections, lesquelles injections pourront être espacées dans le temps (de quelques jours, à plusieurs mois voir années).

Le dispositif 1 peut encore permettre de régler le volume injecté, pour s'adapter au type de traitement, au type et/ou à la taille de la plante.

Le dispositif 1 comprend encore au moins un moyen de commande. Une séquence de traitement comprend, dans l'ordre, une étape d'introduction de l'aiguille 3 dans la plante au moyen d'un actionneur 6, suivie, une fois l'aiguille 3 introduite, d'une opération d'injection au moyen de l'injecteur 7. Il est possible de disposer un moyen de commande pour chaque opération, l'opérateur étant alors en charge de déterminer l'ordre et la durée de chaque opération. Préférentiellement, un unique moyen de commande, tel par exemple une gâchette, commande le début de la séquence complète. L'enchaînement des opérations peut être déterminé automatiquement, par exemple par des temporisations, avantageusement configurables, séparant les opérations. Alternativement, une opération suivante est déclenchée par la fin de l'opération précédente. La fin de l'opération d'introduction peut être déterminée par une mesure de la profondeur ou encore par une augmentation de l'effort résistant lorsque la butée de profondeur 9 est atteinte. La fin de l'opération d'injection peut être déterminée par l'atteinte de la dose de substance à injecter.

Le dispositif 1 peut être portatif. Dans ce cas, il comprend typiquement un moyen de préhension et de guidage, comme au moins une poignée, permettant à un opérateur de le transporter et de le manœuvrer pour la mise en place sur la plante. Le/les moyen(s) de commande de la séquence de traitement est/sont avantageusement disposé(s) à proximité dudit moyen de préhension et de guidage.

Le/les moyen(s) de commande sont avantageusement sécurisé(s) par un dispositif homme mort, ou préférentiellement un dispositif bimanuel. Un dispositif homme mort comprend un organe de manœuvre, non commandé par défaut, dont la commande autorise la transmission d'une commande issu du moyen de commande sécurisé. Ainsi, un actionnement du moyen de commande, ne commande effectivement l'actionneur 6 et/ou l'injecteur 7 ou la séquence complète de traitement qui si le dispositif homme mort est manœuvré.

L'actionneur 6 et/ou l'injecteur 7 peuvent être mis en puissance par différentes énergies.

Selon un mode préféré, une source de puissance pneumatique est retenue, avec une pression de travail comprise entre 2 et 10 bars, préférentiellement comprise entre 4 et 8 bars, soit une source classique couramment disponible.

Selon un mode préféré, une source de puissance électrique est retenue. Une telle source peut être issue du secteur ou d'une batterie afin d'être embarquée sur le dispositif 1 ou son support. Ceci est également adapté à des traitements en environnement difficile ou éloigné. Selon un mode de réalisation préféré, la source de puissance électrique prend la forme d'un bloc d'accumulateurs interchangeable. Un tel mode de réalisation permet avantageusement de faciliter la mobilité du dispositif 1 et, par ce fait, son utilisation.

## Revendications

1. Un procédé de traitement d'une plante par injection sous son écorce d'une substance, de préférence d'une substance phytosanitaire, au moyen d'un dispositif (1) comprenant :
- un corps (2),
- une aiguille (3) prenant la forme d'un tube cylindrique sensiblement rectiligne percée en son centre d'un canal (4) qui débouche par au moins un trou (5) sur la paroi latérale, c'est-à-dire la périphérie, dudit tube cylindrique, et non à l'extrémité destinée à pénétrer dans la plante ; et présentant à son extrémité destinée à pénétrer dans la plante, deux biseaux opposés formant ensemble un bord incisant unique (8) perpendiculaire par rapport à l'axe (AA) de l'aiguille,
- un actionneur (6) apte à mobiliser l'aiguille (3) selon l'axe (AA) de l'aiguille et selon une direction centrifuge (DF), s'éloignant du centre du dispositif (1), de telle manière à permettre l'introduction de l'aiguille (3) dans la plante,
- un injecteur (7) apte à injecter la substance au travers de l'aiguille (3) via le canal (4),
**caractérisé en ce que** ledit procédé comprend les étapes de :
i) positionnement dudit dispositif sur l'écorce de la plante de sorte que le bord incisant unique (8) de l'aiguille (3) soit perpendiculaire aux fibres de bois de cette plante ; et
ii) introduction, par l'activation de l'actionneur (6), de l'aiguille (3) dans l'écorce de la plante, toujours de sorte que le bord incisant unique (8) de l'aiguille (3) soit perpendiculaire aux fibres de bois, et
iii) injection, sous l'écorce de la plante, de la substance par l'activation de l'injecteur (7).

2. Le procédé selon la revendication précédente, **caractérisé en ce que** la surface des deux biseaux opposés de l'extrémité de l'aiguille destinée à pénétrer dans la plante présente chacune indépendamment une surface plane, sphérique ou concave, de préférence la surface des deux biseaux opposé est une surface plane.

3. Le procédé selon les revendications précédentes, **caractérisé en ce que** le bord incisant unique (8), formé ensemble par les deux biseaux opposés de l'extrémité de l'aiguille destinée à pénétrer dans la plante s'inscrit dans le diamètre du tube cylindrique de l'aiguille.

4. Le procédé selon les revendications précédentes, **caractérisé en ce que** l'aiguille (3), est pourvue d'un marquage de positionnement.

5. Le procédé selon les revendications précédentes, **caractérisé en ce que** le dispositif comprend un moyen de couplage (11,12) de l'aiguille (3) dont l'action de couplage est permise par un déplacement de celle-ci selon une direction centripète et **en ce que** ledit moyen de couplage (11,12) de l'aiguille permet un positionnement déterminé du bord incisant unique (8) de l'aiguille (3) en regard du dispositif (1).

6. Le procédé selon les revendications précédentes, **caractérisé en ce que** le dispositif comprend un indicateur (10) permettant à l'opérateur de visualiser la position du bord incisant unique (8) de l'aiguille (3).

7. Une utilisation, pour le traitement d'une plante par injection d'une substance, de préférence d'une substance phytosanitaire, d'une aiguille (3) prenant la forme d'un tube cylindrique comportant en son centre, un canal (4) qui débouche par au moins un trou (5) sur la paroi latérale dudit tube cylindrique, et non à l'extrémité destinée à pénétrer dans la plante ; laquelle extrémité présente deux biseaux opposés formant ensemble un bord incisant unique (8) perpendiculaire par rapport à l'axe (AA) de l'aiguille et lequel bord incisant unique (8) pénètre dans la plante perpendiculairement aux fibres de bois.

## Patentansprüche

1. Verfahren zur Behandlung einer Pflanze durch Injektion einer Substanz unter ihre Rinde, vorzugsweise eines Pflanzenschutzmittels, mit Hilfe einer Vorrichtung (1), umfassend:
- einen Körper (2),
- eine Nadel (3) in Form eines im Wesentlichen geraden zylindrischen Rohres, das in seiner Mitte mit einem Kanal (4) durchbrochen ist, der in mindestens einem Loch (5) auf der Seitenwand, d.h. der Umfangsfläche des genannten zylindrischen Rohres, ausmündet und nicht an dem Ende, das dazu bestimmt ist, in die Pflanze einzudringen, und an seinem Ende, das dazu bestimmt ist, in die Pflanze einzudringen, zwei einander gegenüberliegende Abschrägungen aufweist, die zusammen eine einzige Schneidkante (8) senkrecht zur Achse (AA) der Nadel bilden,
- ein Betätigungsteil (6), geeignet, die Nadel (3) längs der Achse (AA) der Nadel und in einer Zentrifugalrichtung (DF), die sich vom Zentrum der Vorrichtung (1) entfernt, zu bewegen, derart, dass das Einführen der Nadel (3) in die Pflanze ermöglicht wird,
- eine Spritze (7), geeignet, mit der Nadel (3) die Substanz durch den Kanal (4) zu injizieren,
**dadurch gekennzeichnet, dass** das genannte Verfahren die folgenden Schritte umfasst:
i) Ansetzen der genannten Vorrichtung auf der Rinde der Pflanze, derart, dass die einzige Schneidkante (8) der Nadel (3) zu den Holzfasern dieser Pflanze senkrecht verläuft, und
ii) Einführen der Nadel (3) in die Rinde der Pflanze durch Betätigung des Betätigungsteils (6), derart, dass die einzige Schneidkante (8) der Nadel (3) weiterhin zu den Holzfasern dieser Pflanze senkrecht steht, und
iii) Injektion der Substanz unter die Rinde der Pflanze durch Betätigung der Spritze (7).

2. Verfahren nach dem vorangehenden Patentanspruch, **dadurch gekennzeichnet, dass** die Oberfläche der beiden einander gegenüberliegenden Abschrägungen des Endes der Nadel, das dazu bestimmt ist, in die Pflanze einzudringen, jeweils unabhängig eine ebene, sphärische oder konkave Fläche aufweist, vorzugsweise, dass die Oberfläche der beiden einander gegenüberliegenden Abschrägungen eine ebene Fläche ist.

3. Verfahren nach den vorangehenden Patentansprüchen, **dadurch gekennzeichnet, dass** sich die einzige Schneidkante (8), die zusammen von den beiden einander gegenüberliegenden Abschrägungen an dem Ende der Nadel, das dazu bestimmt ist, in die Pflanze einzudringen, gebildet wird, in den Durchmesser des zylindrischen Rohres der Nadel einfügt.

4. Verfahren nach den vorangehenden Patentansprüchen, **dadurch gekennzeichnet, dass** die Nadel (3) mit einer Positionierungsmarkierung versehen ist.

5. Verfahren nach den vorangehenden Patentansprüchen, **dadurch gekennzeichnet, dass** die Vorrichtung ein Mittel zur Kopplung (11, 12) der Nadel (3) aufweist, dessen Kopplungstätigkeit durch deren Verschiebung in einer zentripetalen Richtung ermöglicht wird und dadurch, dass das genannte Mittel zur Kopplung (11, 12) der Nadel eine festgelegte Positionierung der einzigen Schneidkante (8) der Nadel (3) der Vorrichtung (1) gegenüber ermöglicht.

6. Verfahren nach den vorangehenden Patentansprüchen, **dadurch gekennzeichnet, dass** die Vorrichtung eine Anzeige (10) aufweist, die dem Benutzer erlaubt, die Position der einzigen Schneidkante (8) der Nadel (3) zu erkennen.

7. Gebrauch zur Behandlung einer Pflanze durch Injektion einer Substanz, vorzugsweise eines Pflanzenschutzmittels, einer Nadel (3) in Form eines zylindrischen Rohres, das in seiner Mitte einen Kanal (4) aufweist, der in mindestens einem Loch (5) auf der Seitenwand des genannten zylindrischen Rohres ausmündet und nicht an dem Ende, das dazu bestimmt ist, in die Pflanze einzudringen, und wobei dieses Ende zwei einander gegenüberliegende Abschrägungen aufweist, die zusammen eine einzige Schneidkante (8) senkrecht zur Achse (AA) der Nadel aufweist, und diese einzige Schneidkante (8) zu den Holzfasern senkrecht in diese Pflanze eindringt.

## Claims

1. A method of treating a plant by injecting under its bark a substance, preferably a phytosanitary substance, by means of a device (1) comprising:
- a body (2),
- a needle (3) taking the form of a substantially rectilinear cylindrical tube pierced at its center with a channel (4) which opens into at least one hole (5) on the side wall, namely the periphery, of said cylindrical tube, and not at the end intended to penetrate the plant; and having at its end intended to penetrate the plant, two opposite bevels together forming a single incising edge (8) perpendicular to the axis (AA) of the needle,
- an actuator (6) capable of mobilizing the needle (3) along the axis (AA) of the needle and in a centrifugal direction (DF), away from the center of the device (1), so as to allow the introduction of the needle (3) into the plant,
- an injector (7) capable of injecting the substance through the needle (3) via the channel (4),
**characterized in that** said method comprises the steps of:
i) positioning said device on the bark of the plant so that the single incising edge (8) of the needle (3) is perpendicular to the wood fibers of that plant; and
ii) introducing, by activating the actuator (6), the needle (3) into the bark of the plant, always in such a way that the single incising edge (8) of the needle (3) is perpendicular to the wood fibers, and
iii) injecting, under the bark of the plant, the substance by activating the injector (7).

2. The method according to the preceding claim, **characterized in that** the surface of the two opposite bevels of the end of the needle intended to penetrate the plant each independently has a flat, spherical or concave surface, preferably the surface of the two opposite bevels is a flat surface.

3. The method according to the preceding claims, **characterized in that** the single incising edge (8), formed together by the two opposite bevels of the end of the needle intended to penetrate the plant, is inscribed in the diameter of the cylindrical tube of the needle.

4. The method according to the preceding claims, **characterized in that** the needle (3) is provided with a positioning marking.

5. The method according to the preceding claims, **characterized in that** the device comprises a coupling means (11, 12) of the needle (3), the coupling action of which is enabled by a displacement thereof in a centripetal direction, and **in that** said coupling means (11, 12) of the needle allows a determined positioning of the single incising edge (8) of the needle (3) opposite the device (1).

6. The method according to the preceding claims, **characterized in that** the device comprises an indicator (10) allowing the operator to visualize the position of the single incising edge (8) of the needle (3).

7. A use, for treating a plant by injecting a substance, preferably a phytosanitary substance, of a needle (3) taking the form of a cylindrical tube having at its center a channel (4) which opens into at least one hole (5) on the side wall of said cylindrical tube, and not at the end intended to penetrate the plant; which end has two opposite bevels which together form a single incising edge (8) perpendicular to the axis (AA) of the needle and which single incising edge (8) penetrates the plant perpendicular to the wood fibers.
